# EUROPEAN PATENT APPLICATION

(11) **EP 4 464 632 A1**
(43) Date of publication of application: **20.11.2024**
(21) Application number: 23766801.7
(22) Date of filing: 06.03.2023
(51) Int. Cl.: B65G 43/08, B65G 15/08, G06T 7/00

(54) **CONVEYANCE STATE DETECTION DEVICE AND CONVEYANCE STATE DETECTION METHOD**

(30) Priority: 07.03.2022 JP 2022034561
(71) Applicant: JFE Steel Corporation, Tokyo 100-0011 (JP)
(72) Inventor: KAWANISHI Moe, Tokyo 100-0011 (JP); ISHIGAKI Yusuke, Tokyo 100-0011 (JP); NISHINA Yoshiaki, Tokyo 100-0011 (JP)
(74) Representative: Grünecker Patent- und Rechtsanwälte PartG mbB
(86) International application number: PCT/JP2023/008373
(87) International publication number: WO 2023/171625

(57) **Abstract**

The present invention enables automatic detection of the conveyance state of a conveyance article on a belt. A conveyance state detection device (21) for detecting the conveyance state of a raw material (2) on a belt (3), the raw material being conveyed by a belt conveyor (1) includes: an imaging device configured to take a captured image of the belt (3) conveying a conveyance article from above; and a conveyance state detector (10) configured to detect the conveyance state of the raw material (2) on the belt (3) by performing image processing on the captured image taken by the imaging device.

## Description

### Technical Field

The present invention relates to a technology to automatically detect, by image processing, the conveyance state of a conveyance article on a belt, the conveyance article being conveyed by a belt conveyor.

### Background Art

A raw material (a conveyance article) stored in a raw-material yard is conveyed to each factory for sintering, coking, a blast furnace, or the like as a subsequent step in accordance with production in steel works. On this account, the conveyance capacity of the raw material in the raw-material yard greatly influences the production in steel works. In the raw-material yard, multiple belt conveyors are provided for conveyance of the raw material. Raw materials of different types or brands are conveyed. Accordingly, various raw materials are conveyed to respective target places by changing a plurality of belt conveyors via transfer sections using a drop chute or the like.

At this time, a raw material may be loaded on one side of a belt in its width direction in an unbalanced manner at the time when the raw material is loaded on the belt at a transfer section between belt conveyors. In this case, ore dropping (dropping of the raw material from the belt) may occur during conveyance of the raw material. Particularly, the risk of ore dropping increases as the conveyance amount (the amount of loading to the belt) of the raw material increases. Further, along with ore dropping, a machine trouble or cleaning cost in a belt conveyor and its neighboring facility increases.

Conventionally, an operator watches, on a screen, an image captured by a camera to monitor the conveyance state of the raw material on the belt. However, it is difficult to continuously monitor the conveyance state by the belt conveyor by human eyes. On this account, conventionally, in order to avoid the risk of ore dropping, the amount of loading of the raw material to the belt is controlled on the safe side. That is, the operation is performed with sufficient room being left in the conveyance amount of the raw material relative to a belt width. This leads to restraints on the conveyance capacity of the raw material in the raw-material yard.

In view of this, in recent years, it has been desired to collectively monitor the conveyance states of a plurality of belt conveyors without depending on monitoring with human eyes.

Here, as a technology to monitor a belt abnormality of a belt conveyor, there has been proposed a technology described in PTL 1 or 2, for example.

In PTL 1, images of a belt are acquired continuously to manage a belt conveyor conveying a conveyance article. Furthermore, in PTL 1, the position of the belt is determined based on a positional relationship in a group of the images acquired continuously. PTL 1 discloses that the risk of the occurrence of an abnormality in the belt conveyor is determined based on the determined positional relationship of the belt.

Further, in PTL 2, image data of a width-direction end region of a belt is into a deterioration level determination model, and a deterioration level of the width-direction end region of the belt is determined. PTL 2 discloses that information on a determined belt position and information on a deterioration level at the belt position are output.

### Citation List

### Patent Literature

PTL 1: JP 2019-18999 A
PTL 2: JP 2021-17296 A

### Summary of Invention

### Technical Problem

However, the methods for monitoring a belt abnormality as disclosed in PTLS 1 and 2 can monitor the abnormality state of a belt itself, e.g., meandering of the belt during movement. However, in the methods described in PTLS 1 and 2, it is difficult to directly detect an abnormality in a conveyance article on the belt, e.g., the amount of loading of the conveyance article being too small.

The present invention is accomplished in view of the above problems, and an object of the present invention is to enable automatic detection of the conveyance state of a conveyance article on a belt.

### Solution to Problem

In order to achieve the above object, one aspect of the present invention relates to a conveyance state detection device for detecting a conveyance state of a conveyance article on a belt, the conveyance article being conveyed by a belt conveyor. The conveyance state detection device includes: an imaging device configured to take a captured image of the belt conveying the conveyance article from above; and a conveyance state detector configured to detect the conveyance state of the conveyance article on the belt by performing image processing on the captured image taken by the imaging device.

Further, an aspect of the present invention relates to a conveyance state detection method for detecting a conveyance state of a conveyance article conveyed by a belt of a belt conveyor. The conveyance state detection method includes taking a captured image of the belt conveying the conveyance article from above and determining the conveyance state of the conveyance article on the belt by performing image processing on the taken captured image.

### Advantageous Effects of Invention

In the aspects of the present invention, image processing is performed on a captured image of the belt conveying the conveyance article. As a result, with the aspects of the present invention, it is possible to automatically detect the conveyance state of the conveyance article on the belt.

### Brief Description of Drawings

FIG. 1 is a diagrammatic view illustrating an exemplary configuration of a belt conveyor and a conveyance state detection device according to an embodiment of the present invention;
FIG. 2 is a view of an upper belt viewed from a belt moving direction;
FIG. 3 is a view illustrating an exemplary configuration of a conveyance state detector;
FIG. 4 is a view illustrating examples of a captured image according to the embodiment based on the present invention, (a) of FIG. 4 illustrating a captured image taken by an imaging section (a camera), (b) of FIG. 4 illustrating a captured image of a partial region cut out of the image taken by the imaging section (the camera);
FIG. 5A is a view illustrating an image of input in a learned model, and FIG. 5B is a view illustrating an image of output from the learned model; and
FIG. 6 is a flow diagram illustrating a processing example in the conveyance state detector and a determination information output section.

### Description of Embodiments

Next will be described an embodiment of the present invention with reference to the drawings.

Here, a raw-material yard includes multiple belt conveyors. A raw material is conveyed to the raw-material yard by the belt conveyors and stored as a pile of raw materials. Further, the raw material is supplied to a subsequent step by the belt conveyors as needed. In the raw-material yard, raw materials of different types or brands are conveyed by changing a plurality of belt conveyors via transfer sections using a drop chute or the like.

The present embodiment will be described on the assumption of application to a belt conveyor to be used in the raw-material yard. However, this disclosure is also applicable to other belt conveyor facilities.

Further, the present embodiment deals with a raw material constituted by a bulk material as a conveyance article conveyed by a belt, as an example. The conveyance article is not limited to a bulk material.

Note that, in the following description, the conveyance article is also referred to as a raw material.

### (Overall Configuration)

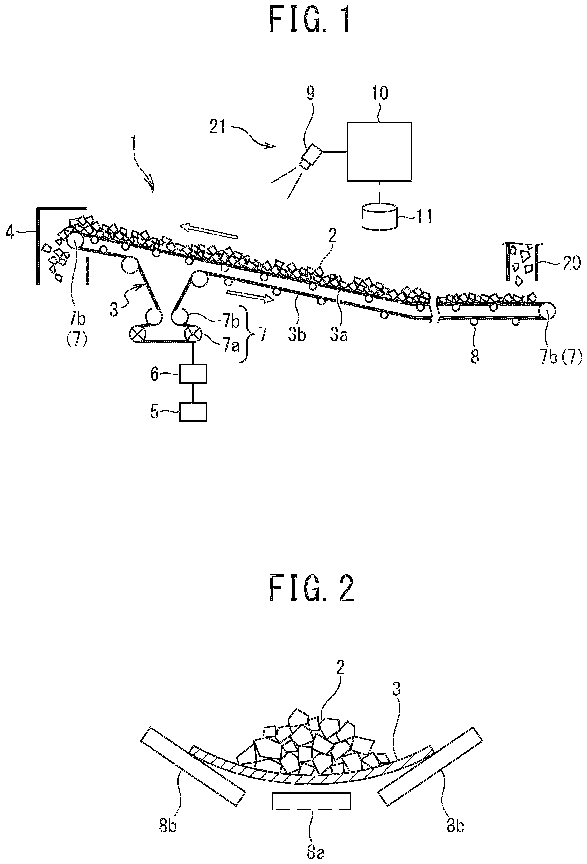

FIG. 1 is a diagrammatic view illustrating a belt conveyor 1 and a conveyance state detection device 21 of the present embodiment.

### <Belt Conveyor 1>

The belt conveyor 1 includes an endless belt 3 and a pulley 7. The belt 3 moves over a plurality of rollers 8 with a predetermined tension in response to the rotation of the pulley 7 constituted by a drive pulley 7a and a plurality of driven pulleys 7b. The drive pulley 7a is rotationally driven by an electric machine 5 via a speed reducer 6.

In the present embodiment, a roller supporting an upper belt 3a among the rollers 8 consists of a combination of a central roller 8a and right and left rollers 8b, as illustrated in FIG. 2. The central roller 8a is disposed in a width-direction center in a belt width direction (the right-left direction in FIG. 2). The right and left rollers 8b are rollers disposed on the right side and the left side of the central roller 8a such that their axes are inclined. This allows the rollers 8 to support the upper belt 3a in a trapezoidal shape. Note that the rollers 8 supporting a lower belt 3b side are each constituted by one roller. Naturally, the support configuration for the belt 3 by the rollers 8 is not limited to this.

Further, in the present embodiment, a raw material input device 20 constituted by a chute or the like is disposed on the upstream side from the upper belt 3a in a conveyance direction. A raw material 2 as a conveyance article is loaded on the belt 3 from the raw material input device 20, and the raw material 2 is conveyed by the moving belt 3. Then, the raw material 2 is conveyed by the upper belt 3a to the downstream side in the conveyance direction and is sequentially put into a chute 4.

### <Conveyance State Detection Device 21>

The conveyance state detection device 21 is a device configured to detect the conveyance state of the raw material 2 loaded on the belt 3. The conveyance state of the raw material 2 is, for example, a mounting state of the raw material 2 put on the moving belt 3.

The conveyance state detection device 21 includes an imaging device 9 and a conveyance state detector 10 as illustrated in FIG. 1. Reference sign 11 indicates a database as an image storage device in which captured images are stored.

### <Imaging Device 9>

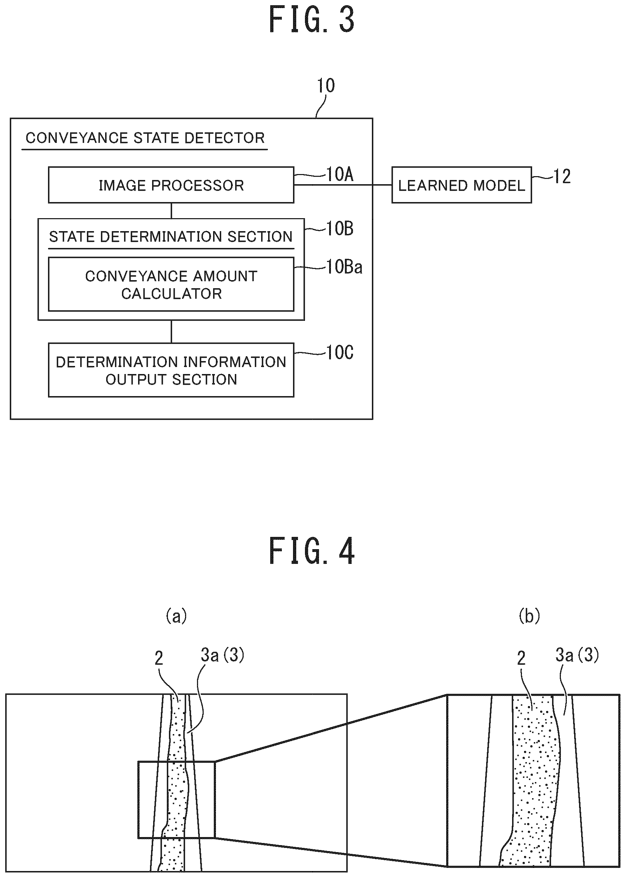

The imaging device 9 of the present embodiment includes a visible camera. The imaging device 9 takes a captured image of the upper belt 3a in the belt 3 of the belt conveyor 1 from above to acquire the captured image. FIG. 4 is a schematic view illustrating an example of the captured image. The imaging device 9 is provided to be adjusted such that the imaging device 9 takes a captured image including at least both ends of the belt 3 in the width direction. In the example of FIG. 1, the imaging device 9 is provided with its imaging axis being inclined in the moving direction of the belt 3.

Note that it is necessary for an installation place for the imaging device 9 to secure a visual field where the belt 3 can be sufficiently monitored. Further, FIG. 1 illustrates a case where one imaging device 9 is provided in one belt conveyor 1. Two or more imaging devices 9 may be provided along the extending direction (the moving direction) of the upper belt 3a. In this case, ore dropping or the like on the way can be detected based on a difference between conveyance states at two places along the conveyance direction.

### <Conveyance State Detector 10>

As illustrated in FIG. 3, the conveyance state detector 10 includes an image processor 10A, a state determination section 10B, and a determination information output section 10C.

### <Image Processor 10A>

The image processor 10A performs image processing on a captured image taken by the imaging device 9. The image processor 10A acquires at least conveyance article region information out of the conveyance article region information and belt region information. The conveyance article region information is conveyance article region information as information on a region corresponding to the raw material 2 on the belt 3. The belt region information is information on a region corresponding to the belt 3 (a portion where the upper surface of the belt 3 is exposed to) on which no raw material 2 is loaded.

An example of the conveyance article region information is positional information on the raw material 2 loaded on the belt 3, or the like.

The image processor 10A may be configured to perform emphasis processing such as binarization on an acquired image as image processing. In this case, width-direction end positions of the belt 3 or an outer contour position of the raw material 2 loaded on the belt 3 in the image is detected. From the detected position, the belt region information or the conveyance article region information is acquired.

However, the belt conveyor 1 in the raw-material yard is often disposed outdoors. In this case, depending on the circumference environment (season, weather, or the like), the detection accuracy in detecting the width-direction end positions of the belt 3 in the image from the captured image might decrease in the emphasis processing. Further, in the emphasis processing, the detection accuracy in detecting the outer contour position of the raw material 2 loaded on the belt 3 might decrease.

On this account, in the present embodiment, a learned model 12 is generated in advance by machine learning such as deep learning by use of supervised data. The learned model 12 is a model which receives a captured image and which outputs conveyance article region information on a region at the mounting position of the raw material 2 loaded on the belt 3.

The image processor 10A of the present embodiment receives a captured image as input data and acquires conveyance article region information by use of the learned model 12.

As the machine learning to obtain the learned model 12, semantic segmentation can be employed, for example.

Assume a case where semantic segmentation is employed. In this case, teacher image data is created such that labeling is performed on pixels constituting a captured image for learning that is taken in advance in such a manner as to classify each of the pixels to any of three region classes. The three regions indicate a region corresponding to the raw material 2 on the belt 3, a region corresponding to the belt 3 except the raw-material position, and the other region. That is, the image is divided into the region corresponding to the raw material 2 on the belt 3, the region corresponding to the belt 3, and the other region. Then, each pixel in the image is labelled to be classified to a corresponding one of the regions (classes) to create teacher image data. Then, multiple pieces of teacher image data are learned by convolutional neural network, so that the learned model 12 is generated. The learned model 12 receives a captured image (input data) and outputs at least information on the region corresponding to the raw material 2 in the captured image.

Here, a model should be generated by use of a plurality of pieces of teacher image data varying in time range or weather for the imaging device 9 to take a captured image. Hereby, the region corresponding to the raw material 2 can be detected stably with accuracy even in a captured image of the belt conveyor 1 provided outdoors. As a result, the conveyance state of the raw material 2 can be automatically monitored with accuracy.

Output information from the learned model 12 is data including information indicative of which region belongs to the region corresponding to the raw material 2 and which region belongs to the region corresponding to the belt 3 in the captured image, for example. Note that the region corresponding to the raw material 2 may be constituted by one region or may be constituted by a plurality of separate regions.

In a case where the learned model 12 using the semantic segmentation is used, the output is as follows. That is, image data in which identification information (the conveyance article region information) indicative of the region corresponding to the raw material 2 is given to each pixel of the region corresponding to the raw material 2 in an output image is output. That is, in image data as an output value from the learned model 12 using the semantic segmentation, identification information to identify the raw material 2, the belt 3, or the other is given to each pixel. This makes it possible to identify which region belongs to the raw material 2 and which region belongs to the belt 3. For example, the learned model 12 outputs image data in which each pixel is displayed with a color corresponding to its class.

Then, the image processor 10A receives a captured image taken by the imaging device 9 and outputs image data including the conveyance article region information, by use of the learned model 12.

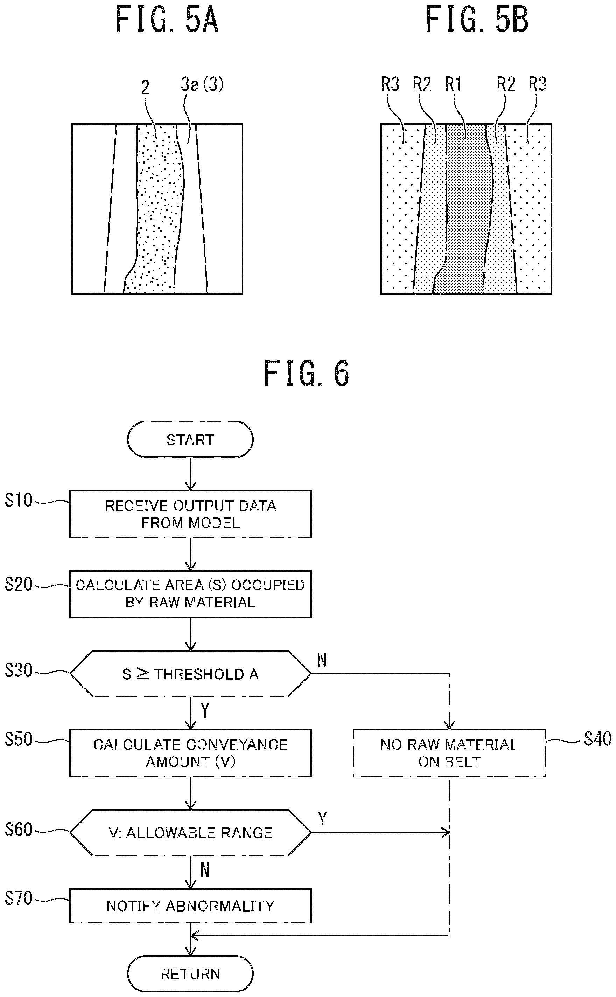

Here, it is not necessary that the captured image input into the learned model 12 be an image taken by the imaging device 9. Assume a case where the imaging device 9 is set to take a captured image with a predetermined length in the longitudinal direction (the moving direction) of the belt 3 as illustrated in (a) of FIG. 4. In this case, an image of a region as illustrated in (b) of FIG. 4 which region is partially cut out of the captured image in the longitudinal direction may be used as the captured image to be input into the learned model 12. The region to be cut out is only a specific region where detection of the conveyance state is required in image data. The specific region is a region where the state of the raw material 2 is stable or a region where the belt 3 meanders in the width direction, for example. Further, two or more regions may be cut out. In this case, image processing should be performed on each of the regions thus cut out. Here, reference sign 3a indicates an exposed portion, in the belt 3, where no raw material 2 is loaded. This also applies to FIG. 5A.

Note that the captured image taken by the imaging device 9, a cut-out image, and the like are stored in the database 11 sequentially. An updating process may be performed on the learned model 12 appropriately by use of the stored images.

### <State Determination Section 10B>

The state determination section 10B determines the conveyance state of the raw material 2 based on information acquired by the image processor 10A.

Here, the conveyance state of the raw material 2 is information on the mounting state of the raw material 2 loaded on the belt 3, for example. Furthermore, the conveyance state of the raw material 2 indicates the presence or absence of the raw material 2 on the belt 3, information on the conveyance amount of the raw material 2 conveyed by the belt 3, and information on the width-direction position of the raw material 2 present on the belt 3.

In a case where the belt region information is also detected, the state of a relative position of the raw material 2 to the belt 3 is also identifiable as the conveyance state. Further, the conveyance state may be determined indirectly based on the belt region information.

The state determination section 10B of the present embodiment determines the conveyance state of the raw material 2 based on information calculated by the image processor 10A. The state determination section 10B determines the conveyance state of the raw material 2 based on an image including the conveyance article region information and the belt region information and output from the learned model 12, for example.

### <Conveyance Amount Calculator 10Ba>

The state determination section 10B of the present embodiment includes a conveyance amount calculator 10Ba.

The conveyance amount calculator 10Ba calculates the area of the raw material 2 present on the belt 3 in a top view. The conveyance amount calculator 10Ba calculates the conveyance amount of the raw material 2 conveyed by the belt 3 per unit length of the belt 3, based on the calculated area of the raw material 2. The conveyance amount is one example of the conveyance state.

The conveyance amount calculator 10Ba calculates the number of pixels corresponding to the raw material 2 (equivalent to an area occupied by the raw material 2) in the image data output from the learned model 12, for example. The conveyance amount calculator 10Ba calculates the area occupied by the raw material 2 by multiplying it by a coefficient corresponding to the size of a pixel. Then, the conveyance amount calculator 10Ba calculates a conveyance amount per unit length of the raw material 2 loaded on the belt 3, based on the calculated area occupied by the raw material 2. The conveyance amount can be calculated based on the area of the raw material 2. For example, a formula to calculate the theoretical conveyance amount of a trough belt conveyor (Utaro Mashima: Conveyor Calculation Method, Kougakutosho Ltd., Tokyo, (1979), p. 14) is used. In this case, the volume of the raw material 2, that is, the conveyance amount thereof can be calculated based on the number of pixels (the area) of the raw material 2, calculated based on identified pixels. At this time, the speed or density of the belt 3 is applied from process requirement.

### <Determination Information Output Section 10C>

The determination information output section 10C outputs information such as the determination information calculated by the state determination section 10B, the conveyance amount calculated by the conveyance amount calculator 10Ba, and the conveyance state determined based on those pieces of information. For example, by outputting the information, the determination information output section 10C notifies an operator of the determination information and so on.

An exemplary processing flow of the state determination section 10B and the determination information output section 10C is described with reference to FIG. 6. This process is executed repeatedly every time the output from the image processor 10A is received, for example.

First, the state determination section 10B receives output data (image data) from the learned model 12 in step S10.

Here, in the present embodiment, the learned model 12 receives a captured image illustrated in FIG. 5A and outputs image data illustrated in FIG. 5B, for example. The image of the image data illustrated in FIG. 5B illustrates a region R1 corresponding to the raw material 2, a region R2 corresponding to the belt 3, and the other region R3 with different expressions. As mentioned earlier, identification information is given per pixel unit. Here, the identification information for pixels may be changed depending on the type of the raw material 2. In FIG. 5B, R1 indicates the region corresponding to the raw material 2, and R2 indicates the region corresponding to the belt 3, and R3 indicates the other region. Pixels in the same region have the same identification information.

Subsequently, in step S20, pixels corresponding to the raw material 2 (the conveyance article) in the image data acquired in step S10 are specified, and the number of the pixels corresponding to the raw material 2 is calculated. The number of the pixels is proportional to an area S occupied by the raw material 2. By multiplying the number of the pixels thus calculated by a coefficient for converting the size of one pixel into a size on an actual belt 3, the area S occupied by the raw material 2 is calculated.

Subsequently, in step S30, it is determined whether or not the number of the pixels corresponding to the raw material 2 (or the area S occupied by the raw material 2), calculated in step S20, is equal to or more than a threshold A set in advance. In a case where the number of the pixels is equal to or more than the threshold A, the process advances to step S50, but in a case where the number of the pixels is less than the threshold A, the process advances to step S40. Note that the threshold A should set based on process requirement.

In step S40, it is determined that "no raw material 2 is on the belt 3," and the determination result is output, so that the process is ended. The determination result is notified by sounding an alarm tone, transmitting the determination result by E-mail, displaying the determination result on a screen, or the like, for example. This allows the operator to find that no raw material 2 is on the belt 3.

In a case where the raw material 2 is on the belt 3, the process advances to step S50 to calculate a conveyance amount V of the raw material 2 in the region on the cut-out image. The conveyance amount V can be calculated from the area S of the raw material 2 by a well-known method.

The calculated conveyance amount V is output to a display section.

Subsequently, in step S60, it is determined whether or not the conveyance amount V calculated in step S50 falls within an allowable range (equal to or more than V1 but equal to or less than V2) set in advance. In a case where the conveyance amount V falls within the allowable range, the process is ended. In a case where the conveyance amount V is out of the allowable range, the process advances to step S70.

It may be also determined whether or not the conveyance amount V falls within the allowable range, based on the size of an exposed portion of the belt in the belt width direction by referring to the belt region information.

Note that a range out of the allowable range includes a case where the conveyance amount is too large (V > V2) and a case where the conveyance range is too small (V < V1).

That is, an appropriate range (a lower limit V1 and an upper limit V2) for the conveyance amount may be calculated to satisfy conveyance conditions, and the range may be taken as the allowable range.

In step S70, the result of the abnormality determination is output. The abnormality determination is notified by sounding an alarm tone, transmitting the abnormality determination by E-mail, displaying the abnormality determination on a screen, or the like, for example. The operator can adjust the increase and decrease of the conveyance amount of the raw material 2 conveyed by the belt 3, based on the output determination result and the conveyance amount.

Further, the presence or absence of ore dropping from the belt 3 is estimated.

Further, the operator may adjust the amount of loading of the raw material 2 to the belt 3 based on the history of conveyance amounts acquired in succession.

Here, in a case where it is determined that the raw material 2 is loaded on the belt 3, the state determination section 10B may execute a process of detecting the position of the raw material 2 relative to the belt 3, as the conveyance state.

For example, respective positions of both ends of the belt 3 in the width direction or a width-direction central position of the belt 3 is calculated based on pixels indictive of the region corresponding to the belt 3. Furthermore, the center of gravity of the region corresponding to the raw material 2 is calculated based on the positions of pixels corresponding to the raw material 2. Then, misalignment, in the belt width direction, of the raw material 2 loaded on the belt 3 is detected based on a deviation of the center of gravity of the region corresponding to the raw material 2 in the belt width direction from the width-direction center of the belt 3. Alternatively, for example, the distance, in the belt width direction, of a width-direction end of the belt 3 and the contour of the region corresponding to the raw material 2 may be calculated as the conveyance state of the raw material 2.

The distance, in the belt width direction, of the width-direction end of the belt 3 and the contour of the region corresponding to the raw material 2 is a criteria for determination of the limit of the conveyance amount of the raw material 2 loaded on the belt 3.

### (Operation and Others)

In the present embodiment, a visible camera (the imaging device 9) is provided at a position where the belt 3 of the belt conveyor 1 can be monitored. The belt 3 conveying the raw material 2 (the conveyance article) is always monitored by the camera. The conveyance state of the raw material 2 on the belt 3 can be automatically detected by performing image processing on a captured image taken by the camera. In the present embodiment, the conveyance state is automatically detected, and therefore, respective conveyance states of multiple belt conveyors 1 can be collectively and effectively monitored without depending on human eyes.

At this time, the operator can grasp the presence or absence of the raw material 2 on the belt 3, the width or the conveyance amount of the raw material 2 on the belt 3, and the like. By adjusting the conveyance amount of the raw material 2 conveyed by the belt conveyor 1 to a proper value appropriately, it is possible to prevent ore dropping from the belt 3. Further, it is possible to take effective measures before a serious facility trouble occurs. On this account, in the present embodiment, it is possible to reduce facility troubles, cleaning time, and cleaning cost caused due to the ore dropping.

Further, it is possible to effectively detect whether or not an appropriate maximum amount is conveyed without ore dropping. Accordingly, the conveyance amount relative to the equipment specifications of the belt conveyor 1 is maximized, which leads to a reduction in demurrage due to the conveyance amount being restrained.

Further, in the present embodiment, the conveyance state is detected by use of the learned model 12. Accordingly, even in a case where this disclosure is applied to the belt conveyor 1 provided outdoors, it is possible to detect the conveyance state accurately.

Thus, this disclosure is useful for monitoring of the raw-material yard in which the raw material 2 such as iron ores or coal is conveyed and stored. This disclosure is a technology particularly suitable for detection of misalignment of the raw material 2.

Note that this disclosure does not indirectly detect the conveyance state of the raw material 2 conveyed by the belt 3 based on the state of the belt 3 itself, unlike the conventional technology. This disclosure is to detect a conveyance state that is the state of the raw material 2 on the belt 3. Based on the detection of the conveyance state, it is also possible to determine a conveyance abnormality in the belt 3 in some cases.

### (Others)

This disclosure can also take the following configurations.
(1) A conveyance state detection device for detecting a conveyance state of a conveyance article on a belt, the conveyance article being conveyed by a belt conveyor, includes: an imaging device configured to take a captured image of the belt conveying the conveyance article from above; and a conveyance state detector configured to detect the conveyance state of the conveyance article on the belt by performing image processing on the captured image taken by the imaging device.
(2) The conveyance state detector detects at least one information out of information on presence or absence of the conveyance article on the belt and information on the conveyance amount of the conveyance article conveyed by the belt, as the conveyance state of the conveyance article.
(3) The conveyance state detector includes: an image processor configured to acquire conveyance article region information as information on a region corresponding to the conveyance article present on the belt by image processing; and a state determination section configured to determine the conveyance state indicative of a state of the conveyance article loaded on the belt, based on the conveyance article region information thus acquired.
(4) The image processor acquires the conveyance article region information from the captured image taken by the imaging device by use of a learned model created by learning, by convolutional neural network, teacher image data in which labeling is performed on pixels in a captured image taken in advance to classify each of the pixels to a region corresponding to the conveyance article on the belt, a region corresponding to the belt, or the other region.
(5) The conveyance state detector includes a conveyance amount calculator configured to calculate an area of the conveyance article present on the belt to calculate the conveyance amount of the conveyance article from the calculated area of the conveyance article, as information on the conveyance state.
(6) The conveyance state detector includes a determination information output section configured to determine whether or not the conveyance amount found by the conveyance amount calculator falls within an allowable range set in advance and to output a determination result when the conveyance amount is determined not to fall within the allowable range.
(7) A conveyance state detection method for detecting a conveyance state of a conveyance article conveyed by a belt of a belt conveyor includes taking a captured image of the belt conveying the conveyance article from above and determining the conveyance state of the conveyance article on the belt by performing image processing on the taken captured image.
(8) The conveyance state detection method includes: acquiring conveyance article region information as information on a region corresponding to the conveyance article present on the belt by the image processing; and determining the conveyance state indicative of a state of the conveyance article loaded on the belt, based on the conveyance article region information thus acquired.

Here, Japanese Patent Application No. 2022-034561 (filed on March 7, 2022) to which the present application claims priority is incorporated herein by reference in its entirety. Herein, the present invention has been described referring to a limited number of embodiments, but the scope of the present invention is not limited to them, and it is obvious for a person skilled in the art that the embodiments are modifiable based on the disclosure.

### Reference Signs List

- 1: belt conveyor
- 2: raw material (example of conveyance article)
- 3: belt
- 9: imaging device
- 10: conveyance state detector
- 10A: image processor
- 10B: state determination section
- 10Ba: conveyance amount calculator
- 10C: determination information output section
- 12: learned model
- 21: conveyance state detection device

## Claims

1. A conveyance state detection device for detecting a conveyance state of a conveyance article on a belt, the conveyance article being conveyed by a belt conveyor, the conveyance state detection device comprising:
an imaging device configured to take a captured image of the belt conveying the conveyance article from above; and
a conveyance state detector configured to detect the conveyance state of the conveyance article on the belt by performing image processing on the captured image taken by the imaging device.

2. The conveyance state detection device according to claim 1, wherein
the conveyance state detector detects at least one information out of information on presence or absence of the conveyance article on the belt and information on a conveyance amount of the conveyance article conveyed by the belt, as the conveyance state of the conveyance article.

3. The conveyance state detection device according to claim 1 or 2, wherein
the conveyance state detector includes:
an image processor configured to acquire conveyance article region information as information on a region corresponding to the conveyance article present on the belt by image processing; and
a state determination section configured to determine the conveyance state indicative of a state of the conveyance article loaded on the belt, based on the acquired conveyance article region information.

4. The conveyance state detection device according to claim 3, wherein
the image processor acquires the conveyance article region information from the captured image taken by the imaging device by use of a learned model created by learning, by convolutional neural network, teacher image data in which labeling is performed on pixels in a captured image taken in advance to classify each of the pixels to a region corresponding to the conveyance article on the belt, a region corresponding to the belt, or the other region.

5. The conveyance state detection device according to any one of claims 1 to 4, wherein
the conveyance state detector includes a conveyance amount calculator configured to calculate an area of the conveyance article present on the belt to calculate the conveyance amount of the conveyance article from the calculated area of the conveyance article, as information on the conveyance state.

6. The conveyance state detection device according to claim 5, wherein
the conveyance state detector includes a determination information output section configured to determine whether or not the conveyance amount calculated by the conveyance amount calculator falls within an allowable range set in advance and to output a determination result when the conveyance amount is determined not to fall within the allowable range.

7. A conveyance state detection method for detecting a conveyance state of a conveyance article conveyed by a belt of a belt conveyor, the conveyance state detection method comprising:
taking a captured image of the belt conveying the conveyance article from above and determining the conveyance state of the conveyance article on the belt by performing image processing on the taken captured image.

8. The conveyance state detection method according to claim 7, further comprising:
acquiring conveyance article region information as information on a region corresponding to the conveyance article present on the belt by the image processing; and
determining the conveyance state indicative of a state of the conveyance article loaded on the belt, based on the conveyance article region information thus acquired.
